# EUROPEAN PATENT APPLICATION

(11) **EP 3 480 181 A1**
(43) Date of publication of application: **08.05.2019**
(21) Application number: 17819986.5
(22) Date of filing: 21.06.2017
(51) Int. Cl.: C05G 3/00, A01N 25/00, A01N 25/10, A01N 25/12, A01P 3/00, A01P 7/04, A01P 13/00, C05G 5/00, C08K 3/00, C08K 5/00, C08L 29/04, C08L 71/03, C08L 77/00

(54) **AGRICULTURAL COMPOSITION, GRANULES AND SUSTAINED RELEASE GRANULES**

(30) Priority: 30.06.2016 JP 2016130268
(71) Applicant: The Nippon Synthetic Chemical Industry Co., Ltd., Osaka-shi, Osaka 530-0018 (JP)
(72) Inventor: FURO Chizuko, Osaka-shi Osaka 530-0018 (JP); MANDAI Shusaku, Osaka-shi Osaka 530-0018 (JP)
(74) Representative: Kuhnen & Wacker Patent- und Rechtsanwaltsbüro PartG mbB
(86) International application number: PCT/JP2017/022846
(87) International publication number: WO 2018/003627

(57) **Abstract**

The aim of the present invention is to provide a composition for agricultural use having an excellent sustained release.

The composition for agricultural use contains a crosslinked substance of an anion-modified polyvinyl alcohol-based resin and a crosslinking agent, and an agrochemical-active component or a fertilizer.

## Description

### [Technical Field]

The present invention relates to a composition for agricultural use, a granular agent, and a sustained release granular agent, and specifically relates to a composition for agricultural use containing an agrochemical-active component or a fertilizer, a granular agent used for agriculture containing the composition for agricultural use, and a sustained release granular agent including the granular agent.

### [Background Art]

Due to environmental and safety concerns, as well as labor-saving efforts by farm households, a reduction in the usage amount of agrochemicals and fertilizers and a reduction of the scattering frequency are demanded. The sustained release of the agrochemical-active component and the fertilizer is an effective tool with regard to these problems and allows for long-term continuity of the chemical effect and the use of appropriate amounts.

A sustained release agrochemical composition containing an organic/inorganic compound formed from a water-soluble polymer compound such as polyvinyl alcohol (PVA) and an inorganic compound such as a metal alkoxide, and an agrochemical-active component, have been proposed as a sustained release technology for slow elution of an agrochemical-active component and a fertilizer from a scattered agrochemical (refer to PTL 1, for example).

In the organic/inorganic compound, a semi-interpenetrating polymer network (IPN) structure is formed in which molecular chains of PVA are interlaced within a three-dimensional network of an inorganic polymer that is a polycondensate of a specific compound and an agrochemical-active component gets locked into such a matrix. Once the organic/inorganic compound is placed in water, sustained release is achieved by elution of the agrochemical-active component from the matrix in water. In this case, it is assumed that the PVA widens the three-dimensional network of the semi-IPN by absorbing water and swelling, and thus supports the elution of the agrochemical-active component.

However, the three-dimensional network of the semi-IPN is rigid and lacks flexibility and thus, even if the network has widened due to the water adsorption and swelling of the PVA, the extent can be assumed to be little. Therefore, regarding the sustained release of the agrochemical-active component, there is still room for improvement in such a conventional sustained release agrochemical composition.

In order to further improve the sustained release of the agrochemical-active component, a sustained release agrochemical composition containing a crosslinked substance of a PVA-based resin has been proposed (refer to PTL 2, for example).

### [Citation List]

### [Patent Literature]

[PTL 1] Japanese Unexamined Patent Application Publication No. 2006-199630 A
[PTL 2] Japanese Unexamined Patent Application Publication No. 2012-6881 A

### [Summary of Invention]

### [Technical Problem]

However, a sustained release effect is also not sufficient in the technology disclosed in the above-mentioned PTL 2 and thus, further improvement is desirable.

In this case, the present invention has been contrived in view of the above-mentioned situation and an aim thereof is to provide a composition for agricultural use having excellent sustained release.

### [Solution to Problem]

As a result of diligent research in view of the above-mentioned situation, the inventors have found that a composition for agricultural use containing a crosslinked substance of an anion-modified polyvinyl alcohol-based resin and a crosslinking agent, and an agrochemical-active component or a fertilizer, has excellent sustained release.

That is, the composition for agricultural use of the present invention contains a crosslinked substance of an anion-modified polyvinyl alcohol-based resin and a crosslinking agent, and an agrochemical-active component or a fertilizer.

The composition for agricultural use of the present invention can be assumed to have an excellent sustained release effect of an agrochemical-active component or a fertilizer, due to the crosslinked substance, in which the anion-modified polyvinyl alcohol-based resin is crosslinked by a crosslinking agent, containing an agrochemical-active component or a fertilizer, and due to an interaction of a hydrophilic anion such as a carboxyl group and the water-resistant crosslinked substance.

In the present invention, it is preferable that the anion-modified polyvinyl alcohol-based resin is a polyvinyl alcohol-based resin containing a carboxyl group and it is preferable that the crosslinking agent is a polyamide polyamine epihalohydrin-based resin.

Furthermore, it is preferable that the composition for agricultural use of the present invention further contains an inorganic filler by which an even more excellent sustained release of the agrochemical-active component or the fertilizer can be obtained.

Moreover, a granular agent containing the composition for agricultural use according to the present invention can be a sustained release granular agent having an even more excellent sustained release of an agrochemical-active component or a fertilizer.

Note that, in the present invention, "agriculture" signifies an activity of obtaining products by growing useful plants utilizing soil and "agriculture" in the present invention includes horticultural agriculture such as the cultivation of vegetables, ornamental flowers, fruits, and garden trees, and forestry for producing timber.

### [Advantageous Effects of Invention]

The composition for agricultural use according to the present invention has excellent sustained release of the agrochemical-active component or the fertilizer and especially by forming a granular agent, a granular agent of excellent sustained release can be obtained.

### [Description of Embodiments]

The composition for agricultural use according to the present invention contains a crosslinked substance of an anion-modified polyvinyl alcohol-based resin (hereinafter, the polyvinyl alcohol-based resin is also written as PVA-based resin) and a crosslinking agent, and an agrochemical-active component or a fertilizer.

A crosslinked substance in which various types of anion-modified PVA-based resins are crosslinked by a crosslinking agent can be used as the crosslinked substance. Especially, it is preferable to use a crosslinked substance obtained from using a PVA-based resin containing a carboxyl group as the anion-modified PVA-based resin and from using a polyamide polyamine epihalohydrin-based resin as the crosslinking agent.

### Anion-modified PVA-based resin

The anion-modified PVA-based resin used in the present invention is a PVA-based resin including a structural unit including an anionic group. For example, a sulfonate group, a carboxyl group, a phosphate group, and the like are suitable as the anionic group, and from within those, especially the carboxyl group is preferable from the point of ease of crosslinking.

Manufacturing methods of the anion-modified PVA-based resin include, for example: (1) a saponification method for a polymer after obtaining the polymer from an unsaturated monomer including an anionic group and a vinyl ester-based compound, (2) a saponification method by a catalyst such as an alkali metal hydroxide, after polymerization of a vinyl ester-based compound in the presence of a compound including an alcohol having an anionic group and an anionic group and including a functional group such as an aldehyde or a thiol as a chain transfer agent. From the point of the manufacturing and the performance of the resin, method (1) is practical.

In the following, method (1) will be described in detail.

A vinyl ester-based compound having a carbon number from 3 to 30, preferably from 3 to 20, can be used as the vinyl ester-based compound. For example, vinyl formate, vinyl acetate, vinyl propionate, vinyl butyrate, vinyl caprate, vinyl laurate, vinyl versatate, vinyl palmitate, vinyl stearate, and the like can be used and from the point of practicability, especially vinyl acetate is preferable. One type selected from among these vinyl ester-based compounds can be used alone or two or more types can be used in combination.

In the present invention, in the polymerization of the unsaturated monomer including the anionic group and the vinyl ester-based compound, apart from the monomer including the anionic group and the vinyl ester-based compound mentioned above, another monomer capable of polymerization with the above-mentioned monomer or the vinyl ester-based compound may be present.

Examples of the other monomer include allyl esters of saturated carboxylic acids (for example, allyl stearate, allyl laurate, coconut oily fatty acid allyl ester, allyl octylate, allyl butyrate, and the like), α-olefins (for example, ethylene, propylene, α-hexene, α-octene, α-decene, α-dodecene, α-hexadecene, α-octadecene, and the like), alkyl vinyl ethers (for example, propyl vinyl ether, butyl vinyl ether, hexyl vinyl ether, octyl vinyl ether, decyl vinyl ether, dodecyl vinyl ether, tetradecyl vinyl ether, hexadecyl vinyl ether, octadecyl vinyl ether, and the like), alkyl allyl ethers (for example, propyl allyl ether, butyl allyl ether, hexyl allyl ether, octyl allyl ether, decyl allyl ether, dodecyl allyl ether, tetradecyl allyl ether, hexadecyl allyl ether, octadecyl allyl ether, and the like), and further (meth)acrylamide, (meth)acrylonitrile, (meth)allyl sulfonate, ethylenically unsaturated sulfonate, styrene, vinyl chloride, and the like. It is preferable that a content of these other monomers with respect to all polymerization components is 20 mol% or less and particularly preferably 10% or less.

A polymerization method is not particularly limited, and any known polymerization method can be used. However, a solution polymerization is usually implemented, in which lower alcohols such as methanol or ethanol are used as solvents.

Note that (meth)acryl expresses acryl or methacryl, (meth)acrylonitrile expresses acrylonitrile or methacrylonitrile, and (meth)allyl expresses allyl or methallyl.

Any means can be used as a preparation method for the monomer in the method. Examples of the method include a method in which first the whole amount of the vinyl ester-based compound and a part of the unsaturated monomer including the anionic group are prepared, the polymerization is started, and the remaining unsaturated monomer is added continuously or in fractions during the polymerization, or a method in which the vinyl ester-based compound and the unsaturated monomer including the anionic group are prepared together at once.

The polymerization reaction is performed using a known radical polymerization catalyst such as azobisisobutyronitrile, acetyl peroxide, benzoyl peroxide, and lauroyl peroxide, for example. Furthermore, the reaction temperature is selected from a range from about 50°C to the boiling point of the solvent to be used.

Next, the polymer obtained as described above undergoes saponification and the anion-modified PVA-based resin is produced.

During the saponification, the polymer is dissolved in alcohol or acetate ester or in a mixed solvent of these two and the saponification is performed in the presence of a saponification catalyst. Examples of the alcohol include alcohols having a carbon number from one to six, such as methanol, ethanol, and butanol, and examples of the acetate esters include methyl acetate and ethyl acetate. The concentration of the polymer in the solvent is usually selected from a range from 20 to 50 wt.%. For example, alkali catalysts such as alkali metal hydroxides or alcoholates including sodium hydroxide, potassium hydroxide, sodium methylate, sodium ethylate, and potassium methylate can be used as saponification catalysts. A usage amount of the catalyst is usually an amount equivalent to 1 to 100 millimole with respect to the vinyl ester-based compound.

Thus, an anion-modified PVA-based resin is obtained. A content of the anionic group in the anion-modified PVA-based resin is preferably from 0.1 to 20 mol%, more preferably from 0.5 to 10 mol%, and even more preferably from 1 to 5 mol%. If the content of the anionic group is too low, the water resistance tends to decrease, whereas if the content is too high, the manufacturing tends to be difficult.

Furthermore, a saponification degree (in accordance with JIS K 6726) of the anion-modified PVA-based resin is usually from 70 to 100 mol%, preferably from 75 to 99.9 mol%, and more preferably from 80 to 99.8 mol%. If the saponification degree is too low, granulation tends to be difficult.

Furthermore, an average degree of polymerization (in accordance with JIS K 6726) of the anion-modified PVA-based resin is usually from 200 to 4000, preferably from 300 to 3000, and more preferably from 500 to 2000. If the average degree of polymerization is too high, the viscosity tends to increase during mixing and if the average degree of polymerization is too low, the water resistance tends to decrease.

One type selected from among these anion-modified PVA-based resins may be used alone or two or more types may be used in combination.

### PVA-based resin containing carboxyl group

From among the above-mentioned anion-modified PVA-based resins, especially a PVA-based resin containing a carboxyl group in which the carboxyl group is an anionic group, will be described in detail.

The PVA-based resin containing the carboxyl group has a structural unit including a carboxyl group and is preferably, from among the PVA-based resins including carboxyl groups, from the point of a high polymerization rate with vinyl ester-based monomers, a maleic acid-modified PVA-based resin or an itaconic acid-modified PVA-based resin, and further, from the point of handling, the maleic acid-modified PVA-based resin is preferable.

As a manufacturing method of the PVA-based resin containing the carboxyl group, a saponification method for a copolymer of an unsaturated monomer including a carboxyl group and a vinyl ester-based compound is practical from the point of manufacturing and performance.

The unsaturated monomer including the carboxyl group has a carboxyl group directly next to a vinyl group, for example. Specific examples include unsaturated compounds including carboxyl groups such as acrylic acid, methacrylic acid, crotonic acid, maleic acid, anhydrous maleic acid, fumaric acid, and itaconic acid; compounds in which these carboxyl groups are completely or partly neutralized by bases such as alkali compounds (for example, sodium hydroxide, potassium hydroxide, and the like); mono-alkyl esters of the unsaturated compounds containing the above-mentioned carboxyl groups, such as methyl acrylate, ethyl acrylate, methyl methacrylate, mono-methyl fumarate, and mono-methyl maleate; and dialkyl esters of the unsaturated compounds containing the above-mentioned carboxyl groups, such as diethyl fumarate, diethyl maleate, and the like. Due to economic and practical considerations, the carbon number of the alkyl groups in these esters is normally from 1 to 20, particularly preferably from 1 to 10, and even more preferably from 1 to 4.

Among these, mono-methyl maleate is preferable from the point of copolymerization ability.

One type from among these unsaturated monomers including the carboxyl groups may be used alone or a plurality of types may be used together.

A vinyl ester-based compound having a carbon number from 3 to 30, preferably from 3 to 20, can be used as the vinyl ester-based compound. For example, vinyl formate, vinyl acetate, vinyl propionate, vinyl butyrate, vinyl caprate, vinyl laurate, vinyl versatate, vinyl palmitate, vinyl stearate, and the like can be used and from the point of practicability, especially vinyl acetate is preferable. One type selected from among these vinyl ester-based compounds can be used alone or two or more types can be used in combination.

In the present invention, in the polymerization of the unsaturated monomer including the carboxyl group and the vinyl ester-based compound, apart from the unsaturated monomer including the above-mentioned carboxyl group and the vinyl ester-based compound, another monomer capable of polymerization with the above-mentioned monomer or the vinyl ester-based compound may be present.

Examples of the other monomer include allyl esters of saturated carboxylic acids (for example, allyl stearate, allyl laurate, coconut oily fatty acid allyl ester, allyl octylate, allyl butyrate, and the like), α-olefins (for example, ethylene, propylene, α-hexene, α-octene, α-decene, α-dodecene, α-hexadecene, α-octadecene, and the like), alkyl vinyl ethers (for example, propyl vinyl ether, butyl vinyl ether, hexyl vinyl ether, octyl vinyl ether, decyl vinyl ether, dodecyl vinyl ether, tetradecyl vinyl ether, hexadecyl vinyl ether, octadecyl vinyl ether, and the like), alkyl allyl ethers (for example, propyl allyl ether, butyl allyl ether, hexyl allyl ether, octyl allyl ether, decyl allyl ether, dodecyl allyl ether, tetradecyl allyl ether, hexadecyl allyl ether, octadecyl allyl ether, and the like), and further (meth)acrylamide, (meth)acrylonitrile, (meth)allyl sulfonate, ethylenically unsaturated sulfonate, styrene, vinyl chloride, and the like. It is preferable that the content of these other monomers with respect to all polymerization components is 20 mol% or less and particularly preferably 10% or less.

The polymerization method is not particularly limited, and any known polymerization method can be used. However, a solution polymerization is usually implemented, in which lower alcohols such as methanol or ethanol are used as solvents.

Any means can be used as a preparation method for the monomer in the method. Examples of the method include a method in which first the whole amount of the vinyl ester-based compound and a part of the unsaturated monomer including the carboxyl group are prepared, the polymerization is started, and the remaining unsaturated monomer is added continuously or in fractions during the polymerization, or a method in which the vinyl ester-based compound and the unsaturated monomer having the carboxyl group are prepared together at once.

The polymerization reaction is performed using a known radical polymerization catalyst such as azobisisobutyronitrile, acetyl peroxide, benzoyl peroxide, and lauroyl peroxide, for example. Furthermore, the reaction temperature is selected from a range from about 50°C to the boiling point of the solvent to be used.

Next, the polymer obtained as described above undergoes saponification and the anion-modified PVA-based resin is produced.

During the saponification, the polymer is dissolved in alcohol or acetate ester or in a mixed solvent of these two and the saponification is performed in the presence of a saponification catalyst. Examples of the alcohol include alcohols having a carbon number from one to six, such as methanol, ethanol, and butanol, and examples of the acetate esters include methyl acetate and ethyl acetate. The concentration of the polymer in the solvent is usually selected from a range from 20 to 50 wt.%. For example, alkali catalysts such as alkali metal hydroxides or alcoholates including sodium hydroxide, potassium hydroxide, sodium methylate, sodium ethylate, and potassium methylate can be used as saponification catalysts. A usage amount of the catalyst is usually an amount equivalent to 1 to 100 millimole with respect to the vinyl ester-based compound.

Thus, a PVA-based resin containing a carboxyl group is obtained. A content of the carboxyl group in the PVA-based resin containing the carboxyl group is preferably from 0.1 to 20 mol%, particularly preferably from 0.5 to 10 mol%, and even more preferably from 1 to 5 mol%. If the content of the anionic group is too low, the water resistance tends to decrease, whereas if the content is too high, the manufacturing tends to be difficult.

Furthermore, the saponification degree (in accordance with JIS K 6726) of the PVA-based resin containing the carboxyl group is usually from 70 to 100 mol%, preferably from 75 to 99.9 mol%, and more preferably from 80 to 99.8 mol%. If the saponification degree is too low, granulation tends to be difficult.

Furthermore, the average degree of polymerization (in accordance with JIS K 6726) of the PVA-based resin containing the carboxyl group is usually from 200 to 4000, preferably from 300 to 3000, and more preferably from 500 to 2000. If the average degree of polymerization is too high, the viscosity tends to increase during mixing and if the average degree of polymerization is too low, the water resistance tends to decrease.

One type selected from among these PVA-based resins containing carboxyl groups may be used alone or two or more types may be used in combination.

### Crosslinking agent

The crosslinking agent used in the present invention forms a crosslinked structure together with the anion-modified PVA-based resin to produce the crosslinked substance and examples of the crosslinking agent include an organic-based crosslinking agent and an inorganic-based crosslinking agent.

Examples of the organic-based crosslinking agent include boron compounds; aldehyde compounds such as formaldehyde, acetaldehyde, glyoxal, and glutardialdehyde; amino resins such as urea resin, guanamine resin, and melamine resin; epoxy-based compounds such as epoxy resin and polyamide polyamine epihalohydrin; hydrazide-based compounds such as adipic acid dihydrazide, carbodihydrazide, and polyacrylic hydrazide; acid anhydrides; and isocyanate compounds such as polyisocyanates and blocked isocyanates.

Examples of the inorganic-based crosslinking agent include titanium compounds such as tetra alkoxy titanate; aluminum compounds such as aluminum sulfate, aluminum chloride, and aluminum nitrate; phosphorous compounds such as phosphite ester and bisphenol A-modified polyphosphate; modified silicones such as alkoxy-modified silicone and glycidyl-modified silicone; and zirconium compounds such as chlorohydroxyoxo zirconium, zirconium nitrate and zirconyl nitrate. From among these, epoxy compounds are preferable from the point of ease of crosslinking and polyamide polyamine epihalohydrin is particularly preferable.

### Polyamide polyamine epihalohydrin-based resin

Examples of the polyamide polyamine epihalohydrin-based resin used in the present invention include polyamide polyamine epichlorohydrin, polyamide polyamine epibromohydrin, and polyamide polyamine methyl epichlorohydrin, and among these, polyamide polyamine epichlorohydrin is preferable from the point of ease of reaction.

The polyamide polyamine epihalohydrin-based resin used in the present invention can be obtained, for example, by a reaction of a polyamide polyamine obtained from a reaction between a polyalkylene polyamine and a dicarboxylic acid, with an epihalohydrin.

A polyalkylene polyamine including at least two or more, preferably 2 to 10, alkylene groups and at least two or more, preferably 2 to 10, amino groups or imino groups in the molecules can be used as the polyalkylene polyamine. Examples include diethylenetriamine, triethylenetetramine, and tetraethylenepentamine, and from among these, diethylenetriamine is preferable. One type selected from among these polyalkylene polyamines may be used alone or two or more types may be used in combination.

Furthermore, instead of some of the polyalkylene polyamines, alkylenediamines such as ethylenediamine, propylenediamine, or hexamethylenediamine; aminocarboxylic acids with carbon numbers from one to six such as ε-aminocaproic acid; and lactams of aminocarboxylic acids with a number of carbon atoms from one to six such as ε-caprolactam can be used.

A dicarboxylic acid having two carboxyl groups in the molecules and a carbon number of 3 or more, preferably from 3 to 30, can be used as the dicarboxylic acid. Examples include saturated or unsaturated aliphatic dicarboxylic acids such as malonic acid, succinic acid, glutaric acid, adipic acid, pimelic acid, suberic acid, azelaic acid, sebacic acid, brassylic acid, dodecanedioic acid, itaconic acid, maleic acid, and fumaric acid; aromatic dicarboxylic acids such as phthalic acid, isophthalic acid, and terephthalic acid; acid anhydrides of each of the above-mentioned acids; and dicarboxylic acid derivates such as esters of each of the above-mentioned acids with lower alcohols of carbon numbers from one to five, especially from one to three (methyl alcohol, ethyl alcohol, propyl alcohol). From among these, glutaric acid, adipic acid, glutaric acid methylester, and adipic acid methylester are preferable. One type selected from among these dicarboxylic acids may be used alone or two or more types may be used in combination.

In the synthesis of the polyamide polyamine by the reaction of the polyalkylene polyamine and the dicarboxylic acid, it is preferable that a reaction mole ratio of the polyalkylene polyamine is from 0.8 to 1.5 mol with respect to 1.0 mol of the dicarboxylic acid. When a reaction amount of the polyalkylene polyamine is too high, the viscosity tends to increase and when the reaction amount is too low, the production amount of the polyamide polyamine tends to be small.

The reaction of the polyalkylene polyamine and the dicarboxylic acid is preferably continued until the produced polyamide polyamine reaches a viscosity within a range from 100 to 1000 mPa*s in a viscosity reference of solid content 50 wt.% aqueous solution at 25°C.

Upon reaction of the amino group included in the polyalkylene polyamine and the carboxyl group included in the dicarboxylic acid, a dehydration and/or dealcoholization reaction is performed by utilizing the reaction heat produced during the preparation of the raw materials or by heating from the outside. The reaction temperature depends on whether the dicarboxylic acid is a free acid or a derivate such as an anhydride and an ester, however, the reaction temperature is usually from 110 to 250°C, preferably from 120 to 180°C. Here, as a catalyst for the polycondensation reaction, one type selected from among, for example, sulfonic acids such as sulfuric acid, benzenesulfonic acid, and p-toluenesulfonic acid; phosphoric acids such as phosphoric acid, phosphonic acid, and hypophosphorous acid; and other known catalysts can be used alone or two or more types may be used in combination. The usage amount of the catalyst is preferably from 0.005 to 0.1 mol, more preferably from 0.01 to 0.05 mol with respect to 1 mol of the polyalkylene polyamine.

The polyamide polyamine epihalohydrin-based resin used in the present invention can be obtained from a reaction of the above-mentioned polyamide polyamine with an epihalohydrin.

Examples of the epihalohydrin include an epihalohydrin and an epihalohydrin including an alkyl group or an alkylene group of a carbon number from 1 to 10. Examples of the halogen in the epihalohydrin include chlorine, bromine, and iodine. Specific examples include epichlorohydrin, epibromohydrin, and methyl epichlorohydrin. Furthermore, two or more of the above-mentioned epihalohydrins can be used as a mixture. Among these epihalohydrins, epichlorohydrin is particularly preferable.

A reaction ratio of the epihalohydrin with respect to the polyamide polyamine is preferably from 0.01 to 2.0 mol, more preferably from 0.05 to 1.5, and even more preferably from 0.05 to 1 mol with respect to 1 mol of the amino group of the polyamide polyamine. When the mole ratio of the epihalohydrin is too high, a production amount of low-molecular organic halogen compounds as by-products of the epihalohydrin tends to increase. When the mole ratio of the epihalohydrin is too low, the water resistance of the obtained resin tends to decrease.

The reaction between the polyamide polyamine and the epihalohydrin is preferably performed at a concentration of 15 to 80 wt.% of solid content in the reaction liquid and at a reaction temperature from 5 to 90°C. Specifically, in order to increase the reaction efficiency of the reaction between the polyamide polyamine and the epihalohydrin, it is preferable to keep the temperature in a range from 5 to 45°C when adding the epihalohydrin to the polyamide polyamine, and to set the temperature for the following reaction from 45 to 90°C so as to increase the molecular weight of the obtained polyamide polyamine epihalohydrin-based resin until a predetermined viscosity is achieved.

A resin with excellent water resistance can be obtained in the reaction between the polyamide polyamine and the epihalohydrin by continuing the reaction until the viscosity of the obtained polyamide polyamine epihalohydrin-based resin is in a range from preferably 10 to 100 mPa*s, more preferably from 15 to 80 mPa*s, in the viscosity reference of solid content 15 wt.% aqueous solution at 25°C. After the viscosity of the reaction liquid has reached this viscosity range, the reaction is stopped by adding water to the reaction liquid for cooling or the like and an aqueous solution of the polyamide polyamine epihalohydrin-based resin can be obtained.

A weight-average molecular weight of the polyamide polyamine epihalohydrin-based resin used in the present invention is usually from 500 to 30000, preferably from 800 to 20000, and more preferably from 1000 to 10000. If the weight-average molecular weight is too high, the viscosity increases and the workability tends to decrease, and if the weight□average molecular weight is too low, the water resistance tends to decrease.

Note that the weight-average molecular weight of the polyamide polyamine epihalohydrin-based resin is measured by gel permeation chromatography (GPC).

### Agrochemical-active component

Examples of the agrochemical-active component used in the present invention include insecticides such as carbamate-based compounds, synthetic pyrethroid-based compounds, organic phosphorous-based compounds, and organic chlorine-based compounds; fungicides such as N-heterocyclic ergosterol inhibitors, carboxamide-based compounds, dicarboximide-based compounds, polyhaloalkylthio-based compounds, and sulfur-based compounds; and herbicides such as sulfonylurea-based compounds, triazine-based compounds, and dinitroaniline-based compounds.

One type from among these agrochemical-active components may be used alone or two or more types may be used in combination.

### Fertilizer

Examples of the fertilizer used in the present invention include nitrogen, phosphoric acid, potassium, calcium (limestone), and magnesium. One type selected from among these fertilizers may be used alone or two or more types may be used in combination.

Furthermore, the agrochemical-active component and the fertilizer may be used in combination.

### Composition for agricultural use

The composition for agricultural use of the present invention contains a crosslinked substance of an anion-modified PVA-based resin and a crosslinking agent, and an agrochemical-active component or a fertilizer.

The content of the crosslinking agent in the crosslinked substance of the anion-modified PVA-based resin and the crosslinking agent is usually from 1 to 25 parts by weight, preferably from 5 to 20 parts by weight, and more preferably from 10 to 15 parts by weight with respect to 100 parts by weight of the anion-modified PVA-based resin. If the content of the crosslinking agent is too high, the amount of crosslinking agent not involved in the crosslinking tends to increase and if the content is too low, the water resistance tends to decrease.

Furthermore, the content of the agrochemical-active component is preferably from 20 to 500 parts by weight, more preferably from 30 to 300 parts by weight, and even more preferably from 50 to 200 parts by weight with respect to a weight of 100 of the anion-modified PVA-based resin. If the content of the agrochemical-active component is too high, a sustained release property tends to decrease, and if the content is too low, the scattering amount tends to increase.

The content of the fertilizer is preferably from 20 to 500 parts by weight, more preferably from 30 to 300 parts by weight, and even more preferably from 50 to 200 parts by weight with respect to 100 parts by weight of the anion-modified PVA-based resin. If the content of the fertilizer is too high, the sustained release property tends to decrease, and if the content is too low, the scattering amount tends to increase.

Furthermore, from the point of increase in volume, it is preferable that the present invention contains an inorganic filler. Examples of the inorganic filler include clay, kaolin, sericite, bentonite, acidic clay, pumice, silica sand, calcium carbonate, zeolite, perlite, and vermiculite.

If the inorganic filler is included, the content of the inorganic filler is preferably from 50 to 10000 parts by weight, more preferably from 100 to 5000 parts by weight, and even more preferably from 200 to 1000 parts by weight with respect to 100 parts by weight of the anion-modified PVA-based resin. If the content of the inorganic filler is within the range mentioned above, the strength of the crosslinked substance becomes more suitable and a better sustained release property is obtained for the agrochemical-active component or the fertilizer.

It is preferable that the content of the anion-modified PVA-based resin is from 1 to 80 wt.%, more preferably from 2 to 50 wt.%, and even more preferably from 5 to 20 wt.% with respect to the total amount of the agrochemical-active component or the fertilizer, the anion-modified PVA-based resin, the crosslinking agent, and, if included, the inorganic filler, that is, the whole composition for agricultural use. If the content of the anion-modified PVA-based resin is too low, it may be difficult to exhibit the sustained release and if the content is too high, preparation of the composition for agricultural use tends to be difficult.

The composition for agricultural use may include, according to necessities, a bonding agent, a disintegrating agent, a dispersant, an absorbent, and other components.

Examples of the bonding agent include starches, gum arabic, carboxymethyl cellulose (CMC), hydroxyethyl cellulose (HEC), lignin sulfonates, polyethylene glycol (PEG), and liquid paraffin.

Examples of the disintegrating agent include ammonium sulfate, potassium chloride, sodium chloride, and other chlorides of calcium, magnesium, aluminum, and the like.

Examples of the dispersant include anionic and non-ionic surfactants.

Examples of the absorbent include white carbon, hydrous calcium silicate, calcium carbonate, anhydrous sodium sulfate, microcrystalline cellulose, plastic, and vinyl chloride.

Examples for the other components include methanol, methylene chloride, and other high boiling point solvents, lubricants, and stabilizers.

### Shape of composition for agricultural use

Examples of the shape of the composition for agricultural use according to the present invention include shapes such as a granular shape, a film shape, and a powder shape.

A thickness of a film-shaped (sheet-shaped) composition for agricultural use is usually from 1 to 10000 µm, particularly preferably from 10 to 8000 µm, and even more preferably from 100 to 5000 µm.

A fabrication method of the film-shaped (sheet-shaped) composition for agricultural use is not particularly limited, however, manufacturing can be performed by a method of flow-casting, onto a substrate, an aqueous liquid containing the anion-modified PVA-based resin, the crosslinking agent, the agrochemical-active component or the fertilizer, and other components according to necessities, and heating to perform crosslinking and to evaporate water. As a heating temperature condition, the heating temperature is usually from 0 to 180°C, more preferably from 5 to 150°C, and even more preferably from 10 to 120°C.

The film-shaped (sheet-shaped) composition for agricultural use obtained by the method is cut into a desired size for use.

In the powder-shaped composition for agricultural use, a particle diameter is usually from 0.01 to 10000 µm, and preferably a particle diameter from 0.1 to 8000 µm, more preferably from 1 to 5000 µm, is used. A manufacturing method of the powder-shaped composition for agricultural use is not particularly limited. For example, a method may be employed in which a mixture containing the anion-modified PVA-based resin, the crosslinking agent, the agrochemical-active component or the fertilizer, water, and other components upon necessity is mixed in a mixing machine (kneader, extruding machine, and the like), grinding or sizing of particles, or pelletizing is performed, and the resulting product is dried. Note that, for details of the manufacturing conditions, reference can be made to WO 95/31900, page 9 line 4 to page 13 line 13, for example.

### Granular agent

A shape of the composition for agricultural use according to the present invention is preferably a granular shape and a granular agent of granular shape containing the composition for agricultural use according to the present invention is described in detail below.

The granular agent containing the composition for agricultural use according to the present invention is used in a spherical or cylindrical shape and the like.

If the granular agent is of spherical shape, a particle diameter is usually from 100 to 12000 µm, and preferably a diameter from 200 to 10000 µm, more preferably from 300 to 7000 µm, is used.

If the granular agent is of cylindrical shape, the particle diameter is usually from 100 to 2000 µm, and preferably, a diameter from 200 to 1500 µm, more preferably from 300 to 1000 µm, is used. The height of the cylinder is usually from 100 to 12000 µm, and preferably a height from 200 to 10000 µm, more preferably from 300 to 7000 µm, is used. Note that the "cylinder" in the present description includes not only a right circular cylinder, but also an elliptic cylinder.

If the diameter of the spherical shape or the diameter or the height of the cylindrical shape are too large, the scatterability tends to decrease. If the diameter of the spherical shape or the diameter or the height of the cylindrical shape are too small, a harmful effect to the human body due to inhalation into the human body after scattering tends to occur more easily.

A manufacturing method of the granular agent containing the composition for agricultural use according to the present invention is not particularly limited, however, the following methods are given as examples.
(i) Method including mixing an anion-modified PVA-based resin powder with the agrochemical-active component or the fertilizer, adding the crosslinking agent or the solvent, shaping (granulation), and drying
(ii) Method including mixing an anion-modified PVA-based resin solution with a crosslinking agent solution and the agrochemical-active component or the fertilizer, shaping (granulation), and drying
(iii) Method including mixing each of the anion-modified PVA-based resin, the agrochemical-active component or the fertilizer, and the crosslinking agent in powdered form, adding the solvent, and shaping (granulation)

From among these methods, method (i) is preferable due to ease of processing.

A manufacturing method of the granular agent according to the present invention will be described in detail, below.

The granular agent according to the present invention can be manufactured by weighting the various types of components, sieving/grinding these components, and homogeneously mixing to obtain a mixed powder. Granulation of the obtained mixed powder is performed by a direct powder compression method in which the dried mixed powder is directly pressed into tablets, or by a wet granulation method or a dry granulation method, and a non-crosslinked or a crosslinked granular agent can be manufactured.

If the various types of components are used as solutions, water, a solvent, or a mixed solvent containing water and a solvent is used. Examples of the solvent include alcohols with a carbon number from one to six such as ethanol, butanol, and isopropyl alcohol, and it is preferable to use isopropyl alcohol. The solvent may be a mixed solvent that is mixed with water, and can be selected appropriately according to the properties of the effective components. From the point of the solubility of the PVA-based resin, it is preferable to use water from among these solvents. Furthermore, the solvent can also be added during the granulation and similarly, solvents such as water and alcohols with a carbon number from one to six such as ethanol, butanol, and isopropyl alcohol, or a mixed solvent containing water and the above-mentioned solvents are used. From the point of the solubility of the PVA-based resin, it is preferable to use water from among these solvents.

The concentration of the above-described anion-modified PVA-based resin solution is preferably from 1 to 50 wt.%, more preferably from 5 to 30 wt.%, and even more preferably from 10 to 20 wt.%.

Furthermore, the concentration of the crosslinking agent solution is preferably from 1 to 50 wt.%, more preferably from 5 to 30 wt.%, and even more preferably from 10 to 20 wt.%.

If the concentration of the anion-modified PVA-based resin solution and the crosslinking agent solution is too high, the viscosity increases and shaping tends to become difficult, and if the concentration is too low, drying takes a long time and the inefficiency tends to increase.

In the shaping of the granular agent, any granulator used in the manufacturing of granular agents can also be used. For example, an extrusion granulator (for example, Micro Granule Maker manufactured by Tsutsui Scientific Instruments Co., Ltd., Basket Granulator manufactured by Dalton Corp.), a stirring granulator (for example, "Rapid Mixer Granulator"manufactured by Gem Pharma Machineries Corp., "Vertical Granulator" manufactured by Powrex Corp.), a fluidized bed granulator (for example, "Tumbling fluidized bed granulating-coating machine - MP-01" manufactured by Powrex Corp.), a spray cooling granulator, a dry granulator, and the like, can be used.

In the composition for agricultural use according to the present invention, the crosslinked substance is formed by crosslinking that proceeds by the drying or heating process in the granulation described above. The temperature during drying or heating is, for example, from 0 to 180°C, preferably from 5 to 150°C, and even more preferably from 10 to 120°C and a duration for drying or heating is, for example, from 10 minutes to 3 hours, preferably from 30 minutes to 2 hours.

After the granulation and crosslinking processes described above, a granular agent containing the composition for agricultural use according to the present invention is obtained.

As will become clear from an example below, the granular agent according to the present invention has excellent sustained release properties of the agrochemical-active component or the fertilizer and can also be called a sustained release granular agent.

### [Examples]

Below, the present invention is described in further detail by way of examples, but so long as there is no departure from the gist thereof, the present invention is not limited to the following examples. Note that hereinafter, "%" and "parts" refer to mass basis.

### Preparation of maleic acid-modified PVA-based resin

100 parts of vinyl acetate and 26 parts of methanol were prepared in a reaction vessel including a reflux cooling device, a dropping funnel, and a stirrer, and the temperature was increased to 60°C under a nitrogen gas flow while stirring. Then, 0.001 mol% (with respect to the total amount of vinyl acetate) t-butyl peroxyneodecanoate were added as a polymerization catalyst and the polymerization was started. Immediately after the start of the polymerization, 2.2 parts (2 mol% with respect to the total amount of vinyl acetate) of mono-methyl maleate and 0.008 mol% (with respect to the total amount of vinyl acetate) t-butyl peroxyneodecanoate were continuously added in accordance with the polymerization speed. When the polymerization rate of the vinyl acetate was 73%, 0.01 parts of 4-methoxyphenol and 58 parts of methanol for dilution and cooling were added to terminate the polymerization. At the end of the polymerization, the remaining amount of active catalyst was 2 ppm with respect to the total amount of reaction liquid.

Subsequently, unreacted vinyl acetate monomer was removed from the system by a method of blowing in methanol vapor and a methanol solution of the copolymer was obtained.

Then, the solution was diluted with methanol to adjust to a concentration of 40%, a 4% methanol solution of sodium hydroxide was added to give a ratio of 30 millimole with respect to 1 mol of a vinyl acetate structural unit in the copolymer, and a saponification reaction was performed for 25 minutes at a temperature from 40 to 50°C. The resin solidified by the saponification reaction was cut and a maleic acid-modified PVA-based resin having a saponification degree of 94 mol%, an average degree of polymerization of 1800, and a modification ratio of 2.0 mol% was obtained.

### Example 1

### Preparation of granular-shaped composition for agricultural use (granular agent)

Five parts of bisphenol A as model substance of the agrochemical, 10 parts of the maleic acid-modified PVA-based resin obtained as described above, and 85 parts of clay (WT clay manufactured by Neoraito Kousan Co., Ltd.) as the inorganic filler were filled into a polyethylene bag and mixed by shaking for three minutes.

50 parts of the above-described powdered mixture were placed into a mill, 15 parts of a 4% aqueous solution of polyamide polyamine epichlorohydrin resin (WS4002 manufactured by Seiko PMC Corp.) were added as the crosslinking agent and mixed in the mill, and extrusion and granulation were performed to obtain a non-crosslinked granular agent. Crosslinking was performed in the obtained granular agent by drying at 80°C for one hour and a granular-shaped composition for agricultural use (granular agent) was obtained as the crosslinked substance.

An elution rate measurement described below was performed for the obtained granular agent. The results are shown in Table 1.

### Elution rate measurement

0.5 parts of the granular agent were added into 250 mL of deionized water and submerged. The solution was maintained at 25°C and at each point in time after one day, after three days, and after seven days, 1000 µL of supernatant liquid were sampled and filtered, and the elution rate (%) of bisphenol A was measured under the measurement conditions described below using high-performance liquid chromatography (HPLC).

### HPLC measurement conditions

Device: Agilent HP 1100 Series
Column: C18ODS
Column temperature: 40°C
Mobile phase: water/CH₃CN = 95/5 (0 min), 50/50 (5 min)
50/50 (6 min), 95/5 (7 min), 95/5 (20 min)
Flow rate: 1 mL/min
Injection volume: 10 µL
Detector: PDA (200, 225 nm)

### PVA film elution experiment

A 10% aqueous solution of a PVA-based resin was prepared by using the above-described maleic acid-modified PVA-based resin, 10 parts of a crosslinking agent (the above-described polyamide polyamine epichlorohydrin resin) with respect to 100 parts of the maleic acid-modified PVA-based resin as a solid, were added, and a cast film of a thickness of 100 µm was produced.

The obtained film was dried at 23°C and 50% RH for three days and further at 70°C for five minutes, afterwards, the film was immersed in water at 23°C for one hour, and the elution rate of the maleic acid-modified PVA-based resin (elution rate of the PVA film) was measured. The results are shown in Table 1.

Note that, after drying the film taken out of the water, the elution rate (%) of the maleic acid-modified PVA-based resin was calculated by (dry weight of film after immersion/dry weight of film before immersion) * 100.

### Examples 2 and 3, and Comparative Example 1

Apart from changing the content of the modified PVA, the type of modification, and the crosslinking agent as shown in Table 1, the granular agent and the cast film were produced under conditions similar to Example 1. An elution rate measurement was performed for the obtained granular agent and cast film, similarly to Example 1. The results are shown in Table 1.

Note that a mixing amount of the inorganic filler was appropriately changed to give, in accordance with a mixing amount of the modified PVA, a total composition of 100 parts.

**Table 1**

| | Anion-modified PVA-based resin | | | Crosslinking agent | Elution rate of bisphenol A | | | Elution rate of PVA film |
|---|---|---|---|---|---|---|---|---|
| | Modification (Modification rate mol%) | Saponification degree (mol%) | Content (%) | Type | (%) | | | (%) |
| | | | | | after 1 day | after 3 days | after 7 days | 23°C, 1 hour |
| Example 1 | Maleic acid (2.0) | 94 | 10 | Epichlor | 7 | 24 | 44 | 14 |
| Example 2 | Maleic acid (4.0) | 96 | 10 | Epichlor | 6 | 17 | 44 | 21 |
| Example 3 | Itaconic acid (1.0) | 88 | 10 | Epichlor | 13 | 35 | 63 | 22 |
| Comparative Example 1 | Acetoacetyl group (3.0) | 92 | 10 | Sodium glyoxylate | 30 | 46 | 74 | 6 |

### Epichlor: polyamide polyamine epichlorohydrin resin (WS4002 manufactured by Seiko PMC Corp.)

As shown in Table 1, in Examples 1 to 3 where a crosslinked substance of the anion-modified PVA-based resin is used, the elution rate of bisphenol A is lower compared to Comparative Example 1 where a crosslinked substance of a non-anion-modified modified PVA-based resin is used, meaning that an excellent sustained release granular agent is obtained.

Furthermore, even though the elution rate of the film is higher in Examples 1 to 3 than in Comparative Example 1, a film with an excellent sustained release of the bisphenol A is obtained.

### [Industrial Applicability]

The composition for agricultural use, the granular agent, and the sustained release granular agent of the present invention have an excellent sustained release of an agrochemical-active component or a fertilizer and thus can be suitably utilized in agricultural fields such as horticultural agriculture and forestry.

### Related Applications

The present application claims priority on the basis of the Japanese patent application filed on June 30, 2016 (Japanese Patent Application No. 2016-130268), the entire contents of which are incorporated herein by reference.

## Claims

1. A composition for agricultural use comprising a crosslinked substance of an anion-modified polyvinyl alcohol-based resin and a crosslinking agent, and an agrochemical-active component or a fertilizer.

2. The composition for agricultural use according to claim 1, wherein a content of the anion-modified polyvinyl alcohol-based resin is from 1 to 80 wt.% with respect to the whole composition for agricultural use.

3. The composition for agricultural use according to claim 1 or 2, wherein the anion-modified polyvinyl alcohol-based resin is a polyvinyl alcohol-based resin containing a carboxyl group.

4. The composition for agricultural use according to any one of claims 1 to 3, wherein the crosslinking agent is a polyamide polyamine epihalohydrin-based resin.

5. The composition for agricultural use according to any one of claims 1 to 4, further comprising an inorganic filler.

6. A granular agent comprising the composition for agricultural use according to any one of claims 1 to 5.

7. A sustained release granular agent comprising the granular agent according to claim 6.
